# EUROPEAN PATENT SPECIFICATION

(11) **EP 0 359 333 B1**
(45) Date of publication and mention of the grant of the patent: **20.07.1994**
(21) Application number: 89202289.8
(22) Date of filing: 08.09.1989
(51) Int. Cl.: A01K 15/00

(54) **Device for goading animals**
Vorrichtung zum Treiben von Tieren
Installation pour chasser les animaux

(30) Priority: 15.09.1988 NL 8802284
(43) Date of publication of application: 21.03.1990
(73) Proprietor: VAN GEMERT B.V., NL-5446 PL Wanroij (NL)
(72) Inventor: van Schijndel, Hubertus Adrianus Johannes C., NL-5446 BE Wanroij (NL)
(74) Representative: Timmers, Cornelis Herman Johannes

(56) References cited:
- NL-A- 8 401 142
- US-A- 3 487 497

## Description

The invention relates to a device for goading animals as described in the preamble of claim 1.

This device is known from NL-A-8 401 142. This known device aimes to prevent piglets from being trapped under the body of a sow when she lies down by generating, and maintaining a pulsating air stream in the space between the piglets and the sow as soon as the sow stands up.

This publication teaches to frighten the piglets in such a way that they do not cross a certain boundery defined by the nozzles from which the air is expelled. The pulsatingly expelled air frightens the piglets so much that they will stay in their box; as soon as the sow lies down the airflow is interrupted and the piglets can move towards the sow without fright.

Driving animals in a particular direction, such as takes place, for example, at stock farms or in slaughterhouses, or during loading and unloading of livestock transportation lorries, generally takes place through the influence of noise (for example by beating on the side walls of a livestock transportation lorry) or through direct physical action on the animals with, for example, sticks or electrical goading devices. These actions would be difficult to describe as "animal-friendly" and they also have the disadvantage that the animals become nervous anxious, and can reach a very undesirable state of stress.

The object of the invention is to produce a device of the type described above which eliminates these disadvantages. This aim is achieved by the measure according to the characterizing clause of Claim 1.

In practice, it has been found that the pressure surges thereby generated and acting on the animals cause the animals to move in the desired direction - without becoming distressed in the process, partly due to the fact that no direct contact at all takes place with the body of the animal. Inflicting pain and causing physical injury are therefore totally avoided.

Contrary to teachings of the prior art the inventive concept is that animals can be goaded to move in a desired direction; they are, so to speak, "pressed forward" or induced to move in the desired direction by pulsating air jets which are, the one behind the other, arranged in the direction of the desired movement.

Preferred embodiments of the device are described in Claims 2 to 4.

A particularly advantageous application of the invention is its use in a livestock transportation lorry. It has been customary until now to unload animals transported in such a lorry by producing a high level of noise, for example by beating on the side walls with clubs; in many cases such a lorry can be unloaded only through personnel entering the lorry (which is already difficult and unpleasant, due to the fact that such lorries often consist of two or more decks, each of them low per se) and driving the animals - which are already distressed because of the transportation - out of the lorry through shouting or direct physical action. On the other hand, a livestock transportation lorry provided with a device or unit according to the invention, which is the subject of Claims 5 and 6 can be cleared quickly and without any problems.

The invention is explained with reference to the drawing, in which:
Figure 1 is a schematic illustration which elucidates the principle of the invention;
Figure 2 is a schematic illustration of a first embodiment of a unit according to the invention;
Figure 3 is a schematic illustration of a second embodiment of such a unit;
Figure 4 is a perspective view of a livestock transportation lorry, provided with a unit according to the invention.

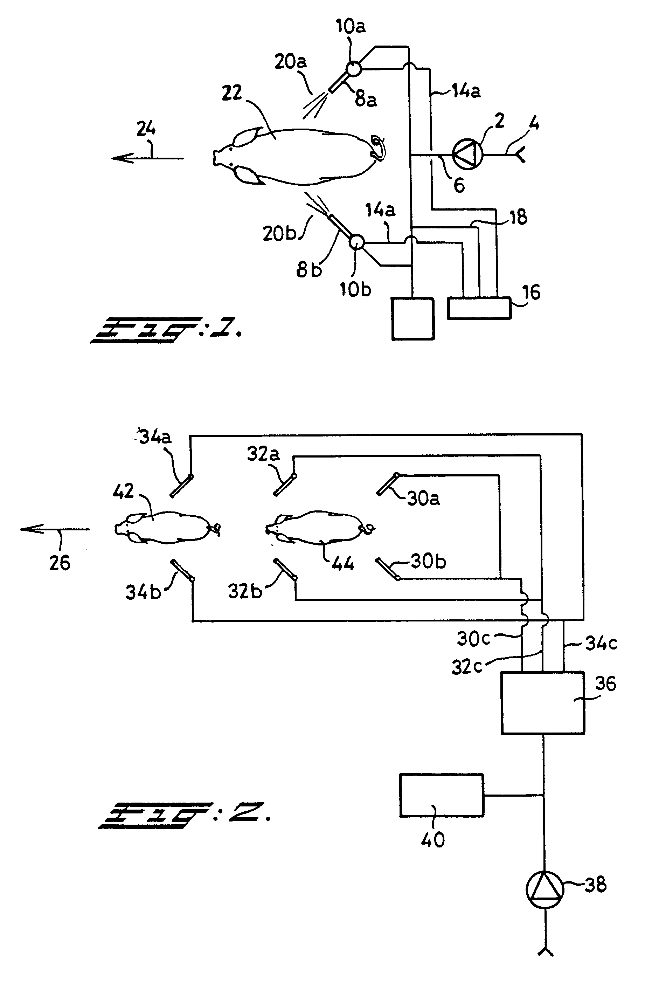

In figure 1 reference number 2 indicates a compressor whose suction line 4 is connected to the outside air, and whose pressure line 6 is connected to two nozzles 8a, 8b by means of controllable valves 10a, 10b; the pressure line 6 is also connected to a buffer tank 12. The two valves 10a, 10b are controlled by means of the control lines 14a, 14b by a suitable control device 16. The valves 10a, 10b can be the electrically controllable valves which are known per se, but pneumatically controlled valves, for example valves of the FESTO make, will preferably be used, and in that case the control device 16 is a pneumatic control device of the type marketed by the same company. This control device 16 is connected, as indicated, by means of the line 18 to the pressure side of the compressor and the buffer tank 12.

The valves 10a, 10b are opened in a pulsating manner at a repetition frequency to be selected as desired, which means that compressed air surges emerge from the nozzles 8a, 8b - schematically indicated by 20a, 20b.

It was found in practice that for an animal 22, for example a pig, such pressure surges constitute an irresistible goad to move away from the source of the pressure surges, in this case thus from the nozzles 8a, 8b. The result of this is that the animal will move in the direction of the arrow 24, which is, of course, the envisaged effect.

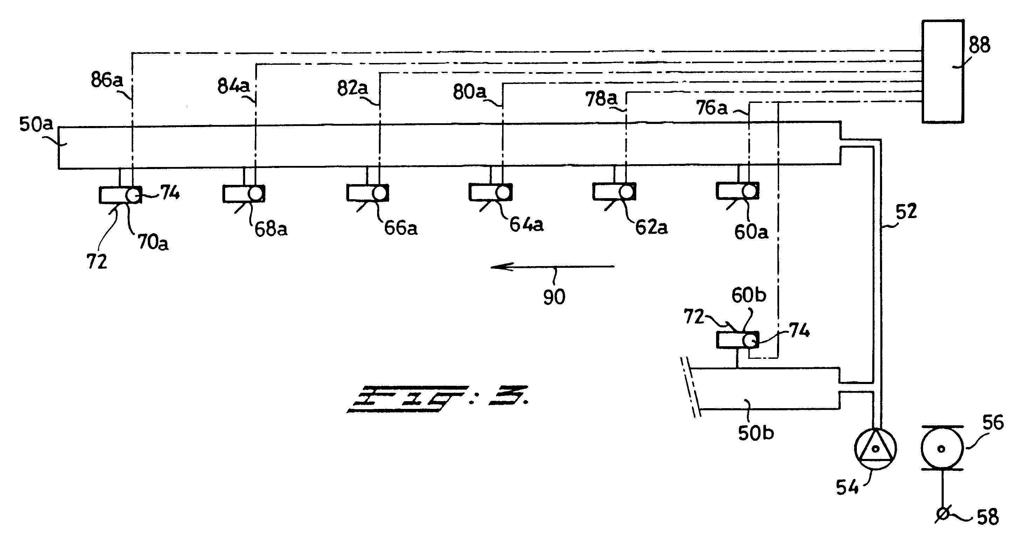

Although in certain cases only a few nozzles will be sufficient, there will undoubtedly be conditions in which the animals have to cover a relatively long distance and have to be goaded all along this distance to keep them moving. A unit suitable for this is shown schematically in Figure 2. A row of nozzles 30a, 32a, 34a and 30b, 32b and 34b is disposed on either side of the path to be travelled in the direction of arrow 26. These nozzles are connected in pairs via the lines 30C, 32c, 34c to the outlets of a central valve control 36 which is fed from a compressor 38, the pressure side of which is connected to the buffer tank 40. The valve control is then preferably such that the pairs of valves 30a-30b, 32a-32b, 34a-34b are actuated in succession at a suitable frequency of repetition with surges of air, so that the animals 42, 44 receive regular goads to move in the desired direction of movement, indicated by the arrow 26.

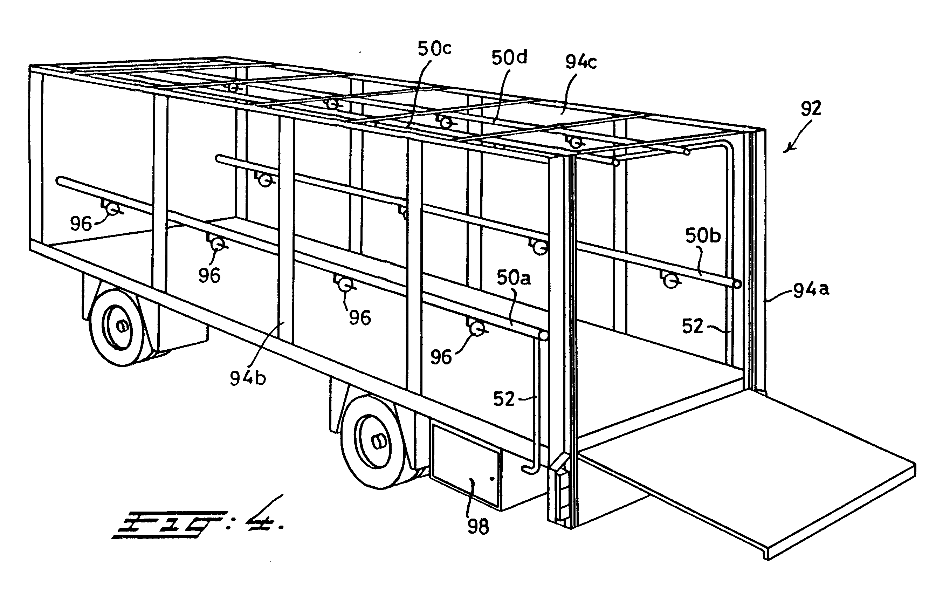

The device according to the invention can be used when animals have to be driven in a desired direction, for example on stock farms or in slaughterhouses, and with particular advantage where the animals have to pass through a low passage, but also for driving animals out of a livestock transportation lorry. The device will preferably be made up of units which are easy to install, each comprising a connecting channel to which the nozzles are connected, each via a valve. According to the invention this connecting channel is then preferably so amply dimensioned that it also serves as buffer space. Figure 3 shows schematically how such a unit according to the invention can be built up.

The connecting channel in this embodiment is an amply dimensioned pipe 50 which is connected by means of the line 52 to the outlet of a compressor 54 which is driven by a drive motor 56, for example an electric motor with the appropriate mains connection 58; of course, the electric motor 56 can also be fed by a power unit. A number of outflow units, indicated by 60a-70a, are disposed at regular intervals along the length of the pipe 50. Each of such units comprises an outflow nozzle 72 and a pneumatically drivable valve 74; the respective valves are connected by means of the control lines 76a to the pneumatic control unit 88. The desired direction of movement is indicated by the arrow 90. In virtually all cases it will be preferable to fit a pipe with outflow units on either side of the path to be travelled by the animals, as indicated by the part of the pipe 50b shown opposite the pipe 50a.

Through a suitable successive control of the valves 73 of the outflow units a series of air pulses can be emitted, advancing in the direction of the arrow 90, so that the animals will move in the desired direction.

Figure 4 shows, finally, how a unit according to the invention can be accommodated easily in a new livestock transportation lorry being built or in an already existing one; this is indicated by reference number 92. The pipes 50a-50d are fitted along the vertical walls 94a, 94b and under the roof 94c, each of said pipes being designed in the manner explained with reference to Figure 3, and each being provided with outflow units 96 corresponding to those which are discussed with reference to Figure 3, and also controlled in the manner explained with reference to this figure. The pipes 50a-50d are connected via the lines 52 to a motor compressor unit (not shown) accommodated in the compartment 98 at the bottom rear side of the transportation lorry 92.

It is pointed out that for the sake of simplicity Figure 4 shows a livestock lorry with high compartment, while in practice such lorries are generally made up of two or more low compartments or decks situated one above the other, in which one can move only bent down - a fact which renders driving out of the animals considerably more difficult.

It has been found that the method of goading animals described above is particularly effective and constitutes an animal-friendly alternative to the methods used hitherto, in which the animals are driven out of the lorry through the influence of noise, for example by beating on the walls of the transportation lorry, or by persons in the transportation lorry, generally using physical force.

## Claims

1. Device for goading animals, particularly pigs, to make them move comprising a number of nozzles (8a, 30a, 32a, 34a; 8b, 30b, 32b, 34b) connected to a source of compressed medium (6, 12, 38, 40, 54) via controllable valves (10a, 10b, 60a..70a), such that this medium is supplied to the nozzles intermittently and pulsatingly, **characterised in that** for moving the animals in one, desired, direction the nozzles are arranged in a row which extends in the said direction of movement with their respective outflow openings arranged in such a way that the expelled medium (20a, 20b) has a velocity component (24) in the lengthwise dimension of the row.

2. Device according to claim 1, **characterised in that** each nozzle (8a, 30a, 32a, 34a; 8b, 30b, 32b, 34b) is connected to the source via a controllable valve (10a, 10b, 60a..70a) controlled by a valve control device (36, 38) for controlling the opening of the respective valves in succession.

3. Device according to claim 1-2, **characterised by** an elongated medium conduit (50a, 50b) which carries a number of controllable valves (60a..70a), each connected to a nozzle.

4. Device for goating animals to induce them to move in a desired direction, **characterised by** at least two devices (50a, 50b) according to one or more of claims 1-3, set up on either side of the desired path to be followed by the animals.

5. Livestock transportation lorry (92) **characterised by** an installation according to claim 4.

6. Livestock transportation lorry (92) according to claim 5, **characterised in that** a device according to claims 1-4 is fitted under the roof (94a) thereof.

## Patentansprüche

1. Vorrichtung zum Treiben von Tieren, insbesondere von Schweinen, um sie zu veranlassen, sich zu bewegen, welche eine Anzahl von Düsen (8a, 30a, 32a, 34a; 8b, 30b, 32b, 34b) umfaßt, die mit einer Quelle eines komprimierten Mediums (6, 12, 38, 40, 54) über regelbare Ventile (10a, 10b, 60a..70a) derart verbunden sind, daß dieses Medium zu den Ventilen mit Unterbrechungen und stoßweise zugeführt wird, dadurch **gekennzeichnet,** daß, zum Bewegen der Tiere in eine gewünschte Richtung die Düsen in einer Reihe angeordnet sind, welche sich in diese Bewegungsrichtung erstreckt, wobei ihre jeweiligen Ausströmöffnungen derart angeordnet sind, daß das ausgestoßene Medium (20a, 20b) eine Geschwindigkeitskomponente (24) in der Längsrichtung der Reihe hat.

2. Vorrichtung nach Anspruch 1, dadurch **gekennzeichnet,** daß jede Düse (8a, 30a, 32a, 34a; 8b, 30b, 32b, 34b) mit der Quelle über ein regelbares Ventil (10a, 10b, 60a..70a) verbunden ist, das von einer Ventilsteuervorrichtung (36, 38) gesteuert wird, um nacheinander das Öffnen der entsprechenden Ventile zu regeln.

3. Vorrichtung nach Anspruch 1 - 2, **gekennzeichnet** durch eine längliche Leitung für das Medium (50a, 50b), welche eine Anzahl von regelbaren Ventilen (60a..70a) trägt, die jeweils mit einer Düse verbunden sind.

4. Vorrichtung zum Treiben von Tieren, um sie zu veranlassen, sich in eine gewünschte Richtung zu bewegen, **gekennzeichnet** durch mindestens zwei Vorrichtungen (50a, 50b) nach einem oder mehreren der Ansprüche 1 - 3, die auf beiden Seiten des gewünschten Wegs aufgebaut sind, dem die Tiere folgen sollen.

5. Viehtransportwagen (92), **gekennzeichnet** durch eine Vorrichtung nach Anspruch 4.

6. Viehtransportwagen (92) nach Anspruch 5, dadurch **gekennzeichnet,** daß eine Vorrichtung nach einem der Ansprüche 1 - 4 unter dessen Dach (94a) angebracht ist.

## Revendications

1. Installation pour chasser des animaux, en particulier des porcs, pour les faire bouger comprenant un certain nombre de buses (8a, 30a, 32a, 34a; 8b, 30b, 32b, 34b) reliées à une source d'un milieu sous pression (6, 12, 38, 40, 54) par l'intermédiaire de vannes commandables (10a, 10b, 60a à 70a) de manière que ce milieu est envoyé aux vannes par intermittence et de manière pulsée, **caractérisée en ce que**, pour faire bouger les animaux dans une direction voulue, les buses sont disposées en une rangée qui est dans ladite direction du mouvement, leurs ouvertures respectives de sortie étant disposées de façon que le milieu expulsé (20a, 20b) ait une composante de vitesse (24) dans la direction longitudinale de la rangée.

2. Installation suivant la revendication 1, **caractérisée en ce que** chaque buse (8a, 30a, 32a, 34a; 8b, 30b, 32b, 34b) est reliée à la source par l'intermédiaire d'une vanne commandable (10a, 10b, 60a à 70a) commandée par un dispositif de commande de vanne (36, 38) pour commander successivement l'ouverture des vannes correspondantes.

3. Installation suivant la revendication 1 ou 2, **caractérisée par** un conduit de milieu allongé(50a, 50b) qui porte un certain nombre de vannes commandables (60a à 70a) dont chacune est reliée à une buse.

4. Installation pour chasser des animaux pour les forcer à bouger dans une direction désirée, **caractérisée par** au moins deux dispositifs (50a, 50b) suivant une ou plusieurs des revendications 1 à 3, installés de chaque côté du trajet désiré à suivre par les animaux.

5. Camion de transport de bétail (92) **caractérisé par** une installation suivant la revendication 4.

6. Camion de transport de bétail (92) suivant la revendication 5, **caractérisé en ce qu'**une installation suivant les revendications 1 à 4 est montée sous son toit (94a).
